(19) **Europäisches Patentamt**

**European Patent Office**

**Office européen des brevets**

(11) **EP 0 911 187 B1**

(12) **EUROPEAN PATENT SPECIFICATION**

(45) Date of publication and mention
of the grant of the patent:
**18.08.2004 Bulletin 2004/34**

(51) Int Cl.$^7$: **B60C 11/12**

(21) Application number: **98905838.3**

(86) International application number:
**PCT/JP1998/000988**

(22) Date of filing: **10.03.1998**

(87) International publication number:
**WO 1998/040228 (17.09.1998 Gazette 1998/37)**

(54) **PNEUMATIC TIRE**

LUFTREIFEN

PNEUMATIQUE

(84) Designated Contracting States:
**DE FI FR GB SE**

(30) Priority: **11.03.1997 JP 5612597**
**21.01.1998 JP 923098**

(43) Date of publication of application:
**28.04.1999 Bulletin 1999/17**

(73) Proprietor: **BRIDGESTONE CORPORATION**
**Tokyo 104-0031 (JP)**

(72) Inventor: **HOSONO, Motoaki**
**Kodaira-shi, Tokyo 187-0031 (JP)**

(74) Representative: **Whalley, Kevin**
**MARKS & CLERK,**
**57-60 Lincoln's Inn Fields**
**London WC2A 3LS (GB)**

(56) References cited:
JP-A- 2 200 503          JP-A- 5 131 812
JP-A- 7 172 111          JP-A- 7 186 629
JP-A- 8 104 112          JP-A- 9 156 324
JP-A- 9 183 303          JP-A- 9 202 115

**Description**

This invention relates to a pneumatic tire having blocks defined by circumferential grooves formed along a rotating direction of the tire and lateral grooves formed along a widthwise direction of the tire and provided with one-side opened sipes opening to the circumferential grooves in opposite directions to each other, and more particularly aims to avoid dragging of surface rubber or so-called creasing due to delay of rubber flow in the vulcanization building of the tire to prevent the occurrence of flow cracking resulting resulted from the creasing.

In the pneumatic tire having a tread pattern provided with blocks, it is general to have a structure wherein a plurality of sipes are formed in the blocks, which particularly ensures the gripping force on wet road surfaces and snow-ice road surfaces as a function thereof.

In order to ensure such a function up to the last running stage of the tire, it is usually attempted to make the depth of the sipe deeper. However, as the cut depth of the sipe approaches the depth of the groove formed along the same direction as the sipe, strain produced in the bottom of the sipe becomes large in the running to cause chipping of the block.

As a countermeasure for preventing such chipping of the block, it has hitherto been attempted to arrange at least a pair of sipes extending substantially in parallel to the lateral grooves in the widthwise direction of the tire in each of the blocks in which one end of each of the sipes is alternately opened to one of the opposed circumferential grooves and the depth of the sipe is made deeper than that of the lateral groove. In this case, however, the flowing of rubber delays between mutual blades for the formation of the sipe disposed in a vulcanization mold in the vulcanization building of the tire and hence the creasing of dragging a surface layer of rubber can not be avoided to cause a problem of creating flow crack.

It is an object of the invention to provide a pneumatic tire capable of solving the aforementioned drawbacks of the conventional technique.

Attention is also drawn to the disclosure of JP-A-7185629.

The present invention in one aspect provides a pneumatic tire having a tread pattern of blocks (b) defined by circumferential grooves (k) extending along a rotating direction of the tire and lateral grooves (i) extending along a widthwise direction of the tire and having a depth shallower than a depth of the circumferential groove, in which each of the blocks has two or more sipes $(S_1, S_2)$ having a depth (d) different from the depth of the lateral groove and two sipes among said sipes are a pair of one-side opened sipes alternately opening at their ends to opposed circumferential grooves along substantially the widthwise direction of the tire and having a portion (L) apparently overlapped with each other in the block viewing from a side of the block, characterized in that the pair of the one-side opened sipes $(S_1, S_2)$ satisfies the following relationship between cross sipe depth (D) and side interval ratio (a/w):

$$D \leq (a/w \times 50) - 18$$

where D: a distance from the deepest position in the crossing of the pair of the sipes $(S_1, S_2)$ viewed at an apparent overlapped state in a side view of a single block (b) to an intersect position between a line segment (n) passing through the deepest position and perpendicular to the surface of the block and the groove bottom of the lateral grooves (i) apparently sandwiching the block in the side view of the block;

a: the shortest distance between the pair of the sipes at the bottom of the one-side opened sipe;
w: the farthest distance in parallel to the shortest distance (a) and between an edge of the block not opened by the sipe and the one-side opened sipe, provided that when $w_1$ is not equal to $w_2$ then a smaller value in either of them is adopted; and further characterized in that

(1) a slant portion $(S_k)$ changing the sipe depth along the lateral groove is formed between a cut edge of the sipe and the bottom portion thereof to connect them; or
(2) said pair of sipes has a depth deeper than the depth of the lateral groove.

Preferably an overlap length L between the sipes in the block is not less than 10 mm.

In the pneumatic tire having the above construction according to the invention, when the cross sipe depth (D) is not more than 3 mm, the one-side opened sipes satisfy conditions of $0.42 \leq a/w_1 < 1.0$ and $0.42 \leq a/w_2 < 1.0$ when the shortest distance between the sipes at the bottom portion of the sipe is a and distances from an edge of the block not opened by the sipe to one of the one-side opened sipes farthest from the edge of the block is $w_1$ or $w_2$.

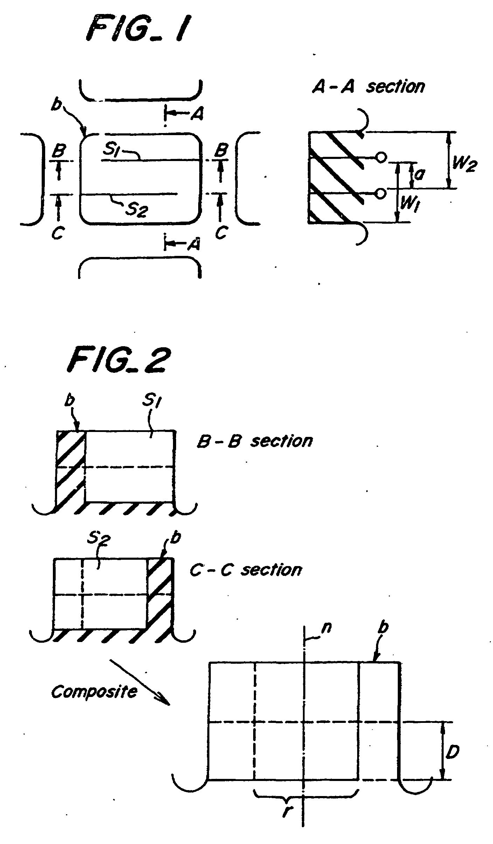

The term "sipe interval ratio" used herein is defined by a ratio of shortest distance a between mutual sipes at the bottom of the one-side opened sipe at section A-A of the block to distance w in parallel thereto and existing from an edge of the block not opened by the sipe to one of the one-side opened sipes farthest from the edge of the block as diagrammatically shown in Fig. 1 (provided that when $w_1 \neq w_2$, a smaller value in either of then is adopted).

Also, the term "cross sipe depth" used herein is defined by a distance D between the deepest position of apparently crossing adjoining sipes $S_1$, $S_2$ in a single block b with each other taken from a side view of the block and a position of apparently intersecting a line segment n passing through the deepest position and perpendicular to the surface of the block b with the groove bottom of the lateral grooves sandwiching the block b taken from the side view of the block as shown in Fig. 2 conveniently composing section B-B and section C-C of Fig. 1 (full range r in the embodiment of Fig. 2 has a distance D).

Moreover, the shortest distance a between the sipes is a straight distance between mutual flask portions in the case of a flask type sipe and a straight distance between mutual pin portions in the case of a pin type sipe.

In the invention, it is preferable that a straight distance from the edge of the block not opened by the sipe to a sipe nearest to the block edge is 20-40% of a length of the block along the block edge, preferably about 30%.

Also, a flask type sipe or one-side flask type sipe is advantageously adopted as the sipe from a viewpoint of mitigating strain to the bottom of the sipe in the running of the tire.

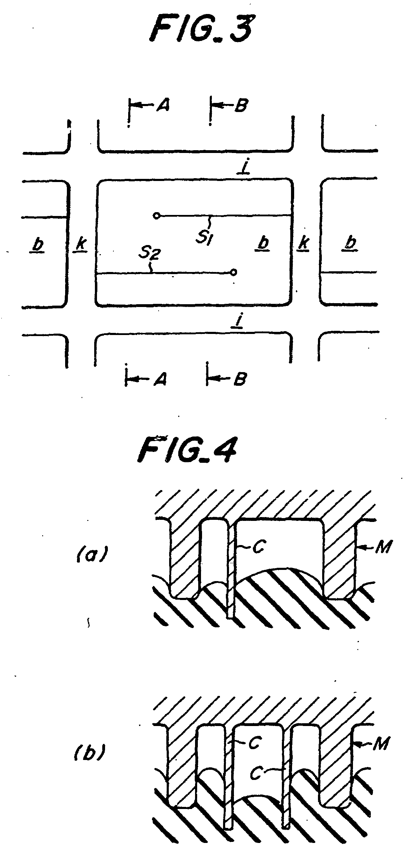

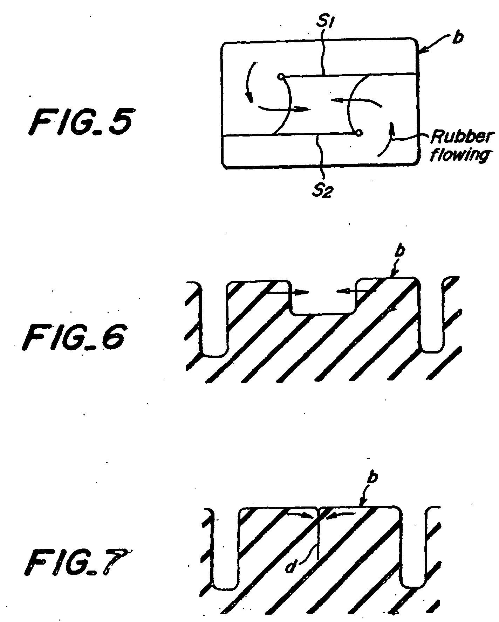

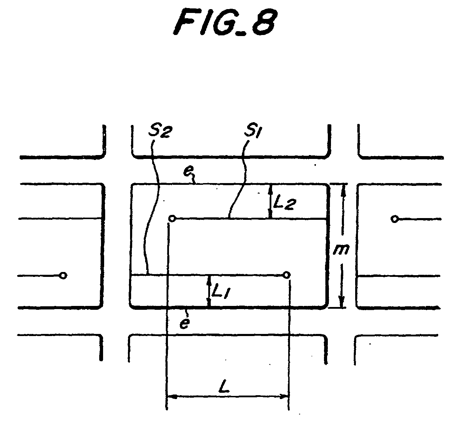

When the sipes are formed in the block in the vulcanization building of the tire, there is used a vulcanization mold provided in its inside with blades for the formation of the sipe. However, if it is intended to form a pair of one-side opened sipes $S_1$, $S_2$ extending substantially in parallel to the widthwise direction of the tire and alternately opening at their ends to the opposed circumferential grooves k as shown in Fig. 3, smooth flowing of rubber is carried out in a position of a vulcanization mold M corresponding to a region A-A of Fig. 3 at both sides of a blade C disposed in the mold M as shown in Fig. 4(a), while the flowing of rubber between mutual blades C tends to be in a position of the mold M corresponding to a region B-B of Fig. 3 as shown in Fig. 4(b) as compared with the flowing of rubber at the outside region of the blade C. As shown by arrows in Fig. 5, rubber flowing between mutual sipes $S_1$, $S_2$ creates a time difference from right and left side portions of these sipes shown in this figure to drag a surface layer of rubber as shown in Fig. 6 and hence flow crack d as shown in Fig. 7 is created in a central portion of a section including both the sipes $S_1$, $S_2$. This crack d results in block loss b under an action of external force applied in the running of the tire.

In the invention, the sipes $S_1$, $S_2$ have a depth deeper than the groove depth of the lateral groove formed in the widthwise direction of the tire and satisfy the relationship between cross sipe depth D and sipe interval ratio a/w represented by $D \leqq (a/w \times 50)-18$, so that the rubber flowing between mutual blades C disposed in the vulcanization mold M can be made approximately equal to that of the other zone and hence the occurrence of creasing is avoided.

In the invention, the overlap length between mutual adjoining sipes $S_1$, $S_2$ in a plan view is a size L shown in Fig. 8. This value is not less than 10 mm for completely preventing the occurrence of the creasing irrespective of the production conditions and rubber material.

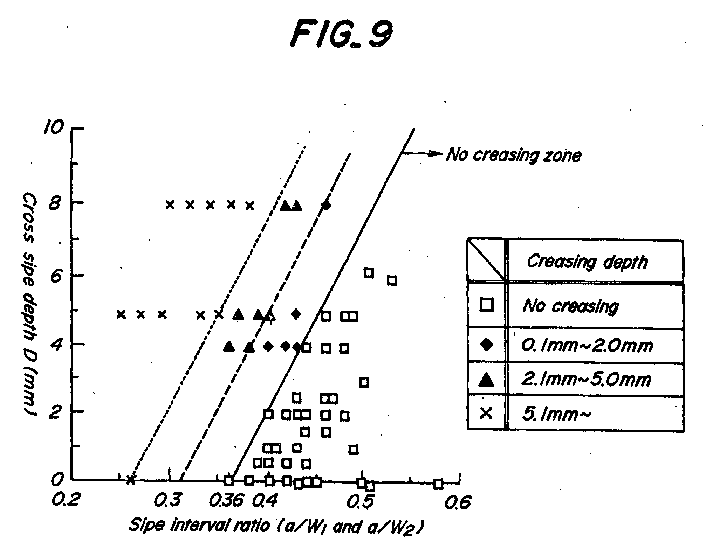

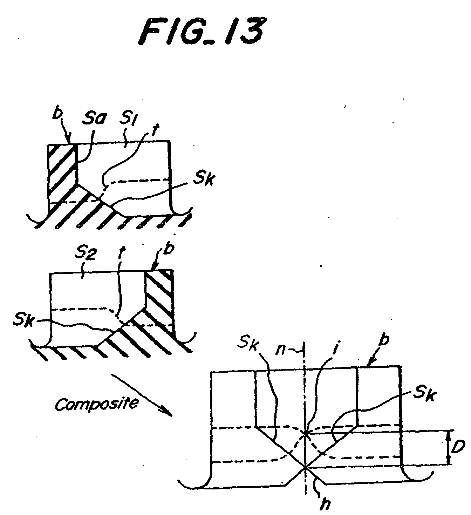

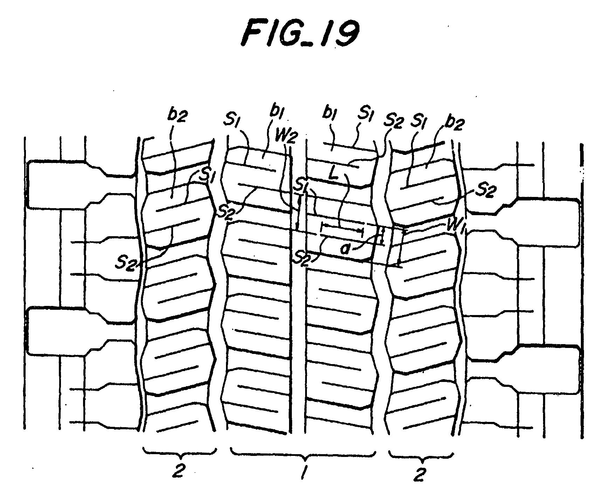

Fig. 9 shows results examined on the relationship between the cross sipe depth D and the sipe interval ratio a/w with respect to the occurrence of the creasing when the overlap length L between the sipes $S_1$, $S_2$ (tread pattern shown in Fig. 19, sipe shown in Fig. 13) is not less than 10 mm.

When the overlap length L between the sipes $S_1$, $S_2$ is not less than 10 mm, the occurrence of creasing can completely be prevented when the above condition or $D \leqq (a/w \times 50)-18$ is satisfied.

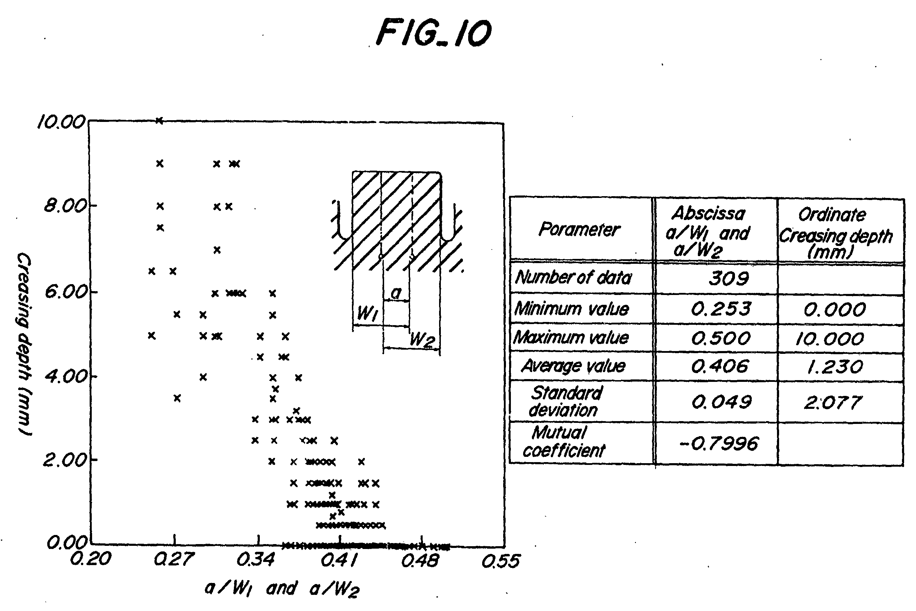

Fig. 10 shows a state of varying the creasing depth with respect to a/w ($a/w_1$, $a/w_2$) as a relation between the shortest distance a between mutual sipes at the bottom portion of the sipe and distance $w_1$, $w_2$ from the block edge to a sipe farthest therefrom in the case of cross sipe depth D=3 mm (tread pattern shown in Fig. 19, sipe shown in Fig. 13). When $w_1$, $w_2$ satisfy $0.42 \leqq a/w_1 < 1.0$ and $0.42 \leqq a/w_2 < 1.0$, it is clear that there is observed no occurrence of creasing. Similarly, in one case of $D \leqq 3$ mm as shown in a graph of Fig. 9, when the above condition is satisfied, no occurrence of creasing is observed.

Also, straight distances $L_1$, $L_2$ from edges e of the block not opened by the sipe to sipes $S_1$, $S_2$ nearest thereto as shown in Fig. 8 are preferably 20-40%, more preferably about 30%, of a side length m of the block opened by the sipe from a viewpoint of ensuring the block rigidity.

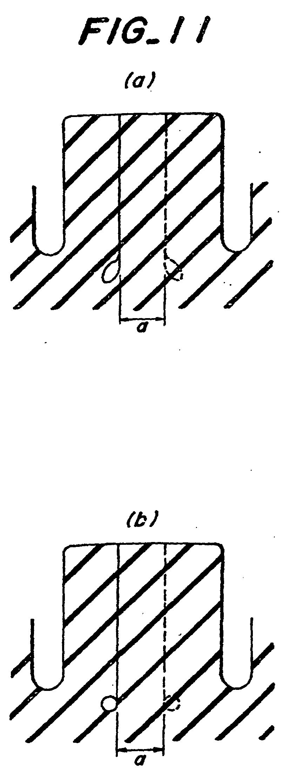

Figs. 11(a) and (b) show a sectional shape of a sipe at its bottom portion, respectively. In the invention, a flask type sipe as shown in Fig. 11(a) or a one-side flask type sipe (one-side pin flask) as shown in Fig. 11 (b) is advantageously adaptable. Thus, the distance a between the mutual sipes can be made somewhat longer than that of a pin flask type sipe as shown at A-A section in Fig. 1 to increase the sipe interval ratio, which is more advantageous in the prevention of the creasing. Furthermore, not only is the drainage performance stably maintained but also the edge effect cutting water film can be expected even in the last running stage of the tire (last wearing stage), so that high gripping force on wet road surfaces and ice-snow road surfaces can be ensured.

Moreover, according to the invention, the opening directions of the sipes can alternately be opposed every adjoining block along the forward rotating direction of the tire, whereby the block rigidity can be enhanced. Also, the sipes as defined in the invention may be formed in a block row existing in a shoulder portion.

Although the sipe to be formed in the block is straight in the illustrated embodiments of the invention, it may be zigzag. Even in the latter sipe, the effect of preventing the occurrence of creasing resulting in flow cracking is unchangeable.

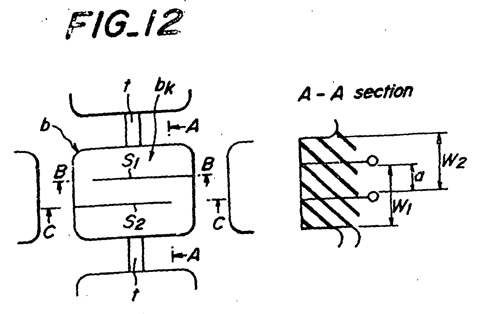

In Fig. 12 is shown a main part of a pneumatic tire having the sipe structure according to the invention. Fig. 13 comprises B-B section and C-C section of sipes S$_1$, S$_2$ shown in Fig. 12 together with a side view conveniently composed thereof at the C-C section.

Particularly, in order to prevent uneven wear of the block, this tread pattern has a construction that a step difference t is formed so as to change the groove depth of the lateral groove at both sides of the step difference to increase the rigidity of the block b opened by the sipe at its kicking-out side b$_K$ (the kicking-out side of the block easily opens the sipe and the groove depth of r the lateral groove corresponding to such a side is shallower to increase the rigidity and the subsequent groove depth of the lateral groove bordered by the step difference t is deeper to balance the shallower portion) and also the depth of the sipe is changed along the lateral groove (a slant portion S$_K$ is formed) to prevent chipping of the block. In this embodiment, the cross sipe depth D is a distance between a deepest position h of apparently crossing the sipes S1, S2 taken in a side view and a position i of apparently intersecting a line segment n passing through the position h and perpendicular to the outer surface of the block with groove bottoms of the lateral grooves sandwiching the block b therebetween as shown in Fig. 13.

As shown in Fig. 13, the slant portion S$_k$ is formed between a cut edge S$_a$ of the sipe S$_1$, S$_2$ and the bottom portion thereof to connect them, whereby the block chipping can be prevented and also it is possible to make the value of the cross sipe depth D smaller than that of a sipe having a flat bottom portion as shown in Fig. 2 (called a flat sipe), which can advantageously enlarge the no-creasing zone shown in relation to the sipe interval ratio in Fig. 9. Furthermore, such a sipe tends to smoothen the flowing of rubber at an initial stage in the vulcanization building of the tire.

The shape of the slant portion S$_k$ may be straight or curved. Also, the forming zone of the slant portion may be a region directly ranging from a cut end of the sipe along the bottom portion to an opening end of the sipe.

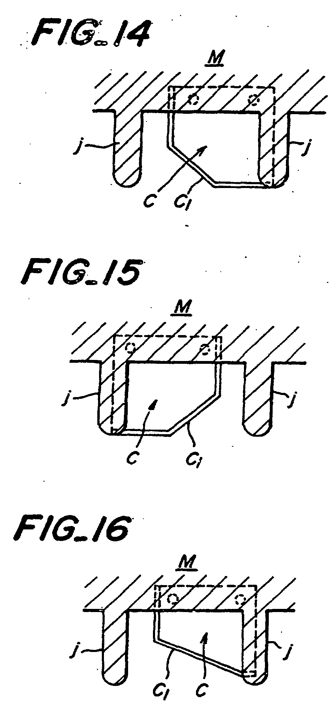

In Figs. 14-17 are shown main parts of a blade C for the formation of the sipe and a projection j for the formation of the circumferential groove disposed inside of a mold M suitable for the manufacture of the pneumatic tire according to the invention, respectively. Particularly, when the sipe is a flask type sipe (pin flask, flask, one-side flask or the like), an expanding portion C$_1$ capable of forming the flask is disposed on a top end portion of the blade C.

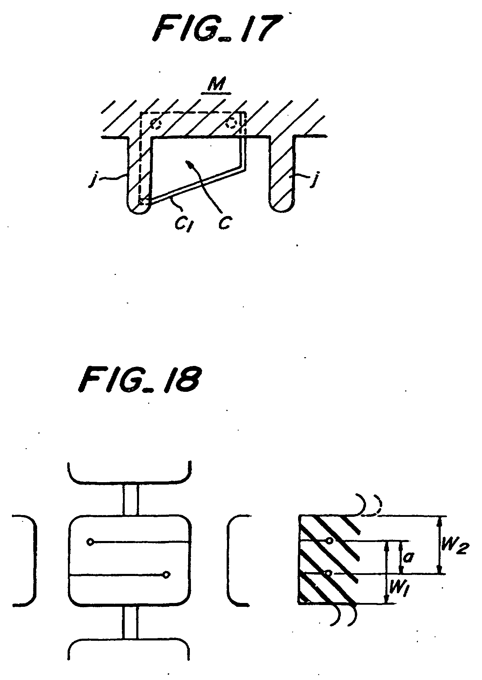

Fig. 18 shows an example wherein the depth of the sipe S$_1$, S$_2$ is shallower than that of the lateral groove, which is included in the invention. In this case, the cross sipe depth D is conveniently adopted to be zero.

The invention will be further described with reference to the accompanying drawings, in which:

Fig. 1 is a plan view and A-A section of a pneumatic tire according to the invention.

Fig. 2 is a B-B section, a C-C section and a composed side view of Fig. 1.

Fig. 3 is a view illustrating a main part of a tread in the pneumatic tire.

Fig. 4 is a diagrammatic view of a mold for the vulcanization building of the tire and rubber flowing in the mold, in which (a) is a portion corresponding to region A-A of Fig. 3 and (b) is a portion corresponding to region B-B of Fig. 3.

Fig. 5 is a view illustrating the flowing state of rubber in the conventional vulcanization building.

Fig. 6 is a view illustrating a creasing state.

Fig. 7 is a view illustrating a flow crack.

Fig. 8 is a schematic view of an overlap length L.

Fig. 9 is a graph showing a relationship between cross sipe depth and sipe interval ratio.

Fig. 10 is a graph showing a relation between a/w and creasing depth.

Figs. 11(a) and (b) are views illustrating sectional shapes of the sipe according to the invention.

Fig. 12 is a view of a tread pattern in the pneumatic tire according to the invention and its A-A section.

Fig. 13 is a sectional shape and composed side view of sipes in the pneumatic tire according to the invention.

Fig. 14 is a view illustrating a main part of an inside of a vulcanization building mold suitable for the manufacture of the pneumatic tire according to the invention.

Fig. 15 is a view illustrating a main part of an inside of the vulcanization building mold suitable for the manufacture of the pneumatic tire according to the invention, making a pair with that shown in Fig. 14.

Fig. 16 is a view illustrating a main part of an inside of another vulcanization building mold suitable for the manufacture of the pneumatic tire according to the invention.

Fig. 17 is a view illustrating a main part of an inside of the vulcanization building mold suitable for the manufacture of the pneumatic tire according to the invention making a pair with that shown in Fig. 16.

Fig. 18 is a view showing a main part of a tread pattern in the pneumatic tire according to the invention and its section.

Fig. 19 is a view illustrating a tread pattern in the pneumatic tire according to the invention.

Fig. 20 is a section and a composed side view of sipes in the tire shown in Fig. 19.

Fig. 21 is a view illustrating a tread pattern in the pneumatic tire according to the invention.

Fig. 22 is a view illustrating a tread pattern in the pneumatic tire according to the invention.

Fig. 23 is a section and a composed side view of sipes in the pneumatic tires shown in Fig. 21 and Fig. 22.

Fig. 24 is a view illustrating a tread pattern in the pneumatic tire according to the invention.

Fig. 25 is a sectional shape and a size of sipes in the tire shown in Fig. 24.

Fig. 26 is a view illustrating a tread pattern in the pneumatic tire according to the invention.

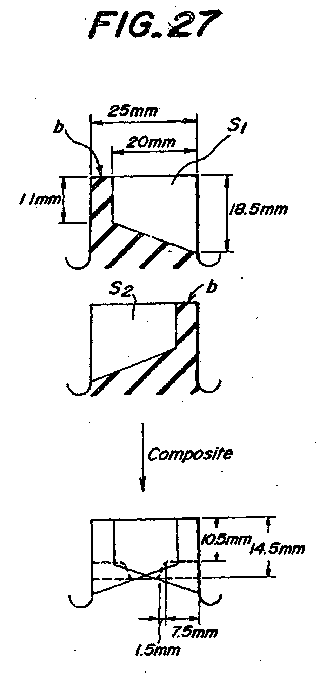

Fig. 27 is a sectional shape and a size of sipes in the tire shown in Fig. 26.

Fig. 19 shows a tread pattern applied to a pneumatic tire (a heavy duty pneumatic tire having a size of 11R22.5) with a sipe structure according to the invention having sipes as shown in Fig. 2 (flat sipes). In this embodiment, each of blocks $b_1$, $b_2$ existing in a central zone 1 and both side zones 2 of a tread (size of block: 28.5 mm in a rotating direction, 37.5 mm in a widthwise direction) is provided with two straight sipes $S_1$, $S_2$ extending along an edge of the block in the widthwise direction (pin flask type, overlap length L=22.5 mm, straight distance from an edge of the block not opened by the sipe to a sipe nearest thereto = 9.5 mm, $w_1$=$w_2$= 18 mm, length from a cut end to opening end = 30 mm), a straight distance a between mutual sipes in each sipe $S_1$, $S_2$ is 8 mm (a/$w_1$, a/$w_2$= 0.444), a groove depth of each sipe $S_1$, $S_2$ is 18 mm, a depth of a circumferential groove is 20 mm, a depth of a lateral groove is 12.5 mm, and a cross sipe depth D is 5.5 mm.

In the pneumatic tire having the above construction, it is possible to smoothen the rubber flowing from a lower side of a blade in a mold during the vulcanization building and the occurrence of creasing resulting in flow cracking is not observed.

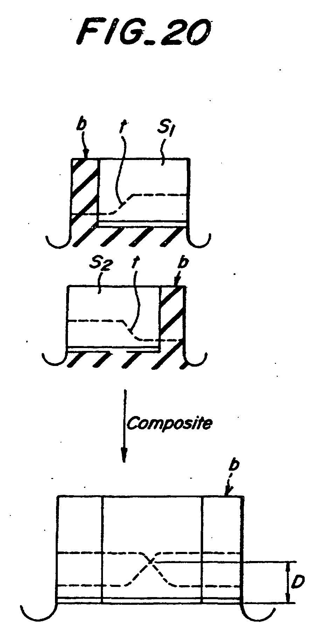

Fig. 20 shows an embodiment of the pneumatic tire having the same structure as in Fig. 19 except that a step difference t is formed in the lateral groove of the tire for increasing the rigidity of the block at a kicking-out side and groove depths at both sides of the step difference are 10 mm and 15 mm and the cross sipe depth D is 7 mm. Even in this pneumatic tire, it is possible to smoothen the rubber flowing from a lower side of a blade in a mold during the vulcanization building and the occurrence of creasing resulting in flow cracking is not observed.

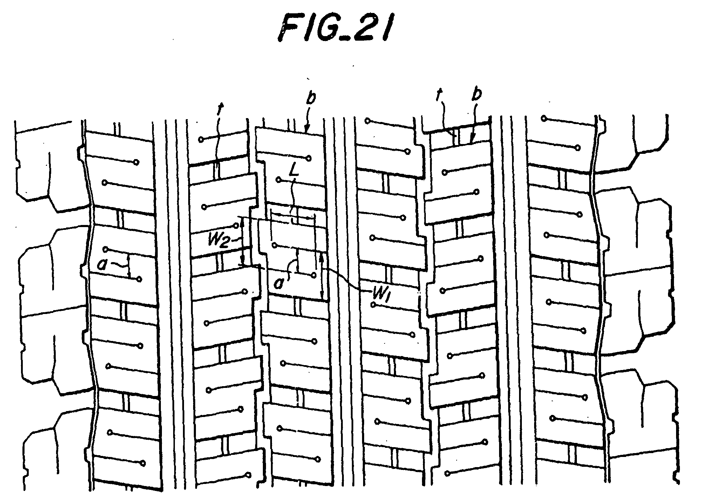

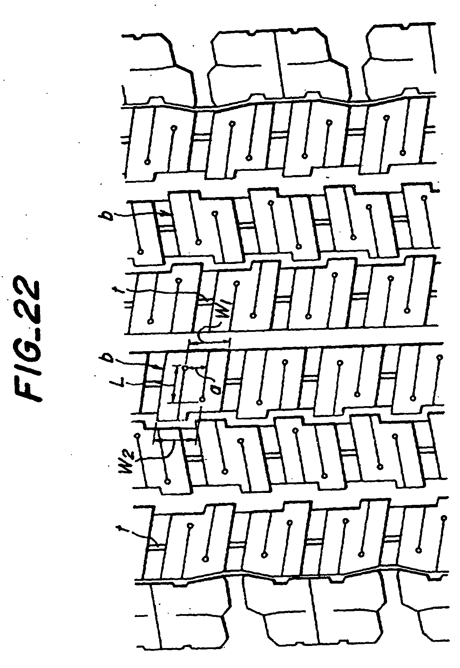

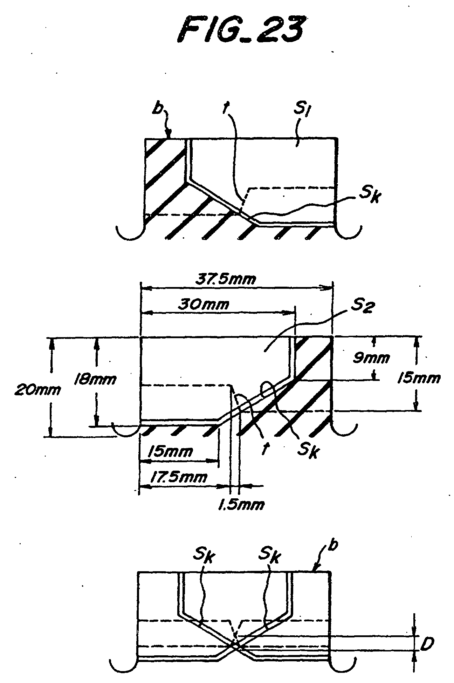

In Fig. 21 and Fig. 22 are shown other tread patterns of the pneumatic tire according to the invention (tire size: 11R22.5) having a step difference t in the lateral groove and sipes with a shape and a size as shown in Fig. 23, respectively. In these embodiments, a/$w_1$ and a/$w_2$ are 0.428, L is 12 mm, and the cross sipe depth D is mm. Even in the pneumatic tire having the above construction, the occurrence of creasing is not observed.

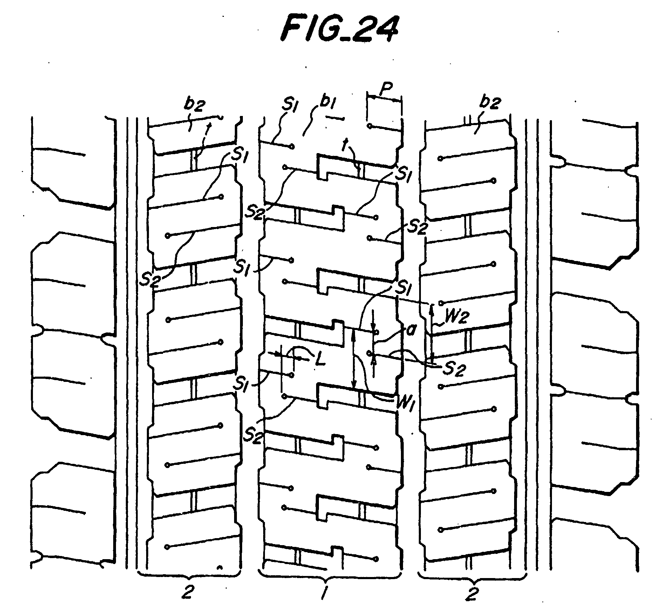

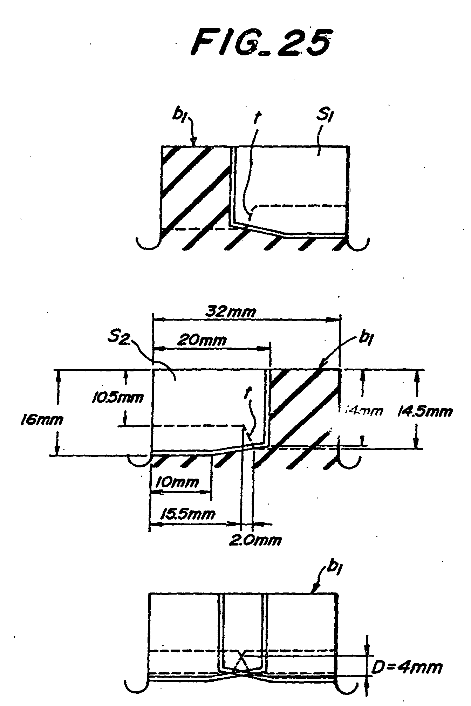

In Fig. 24 is shown a pneumatic tire in which a cut length P in the central zone 1 of the tread is 20 mm, a is 8 mm, $w_1$ and $w_2$ are 24 mm, a/$w_1$ and a/$w_2$ are 0.333, L is 8 mm, sipes S1, S2 have a shape and a size as shown in Fig. 25 and the side zone 2 of the tread is the same as in Figs. 21 and 22. Even in this tire, the rubber flowing is smooth at a position corresponding to the blade of the mold in the vulcanization building and the occurrence of creasing resulting in flow cracking is not observed.

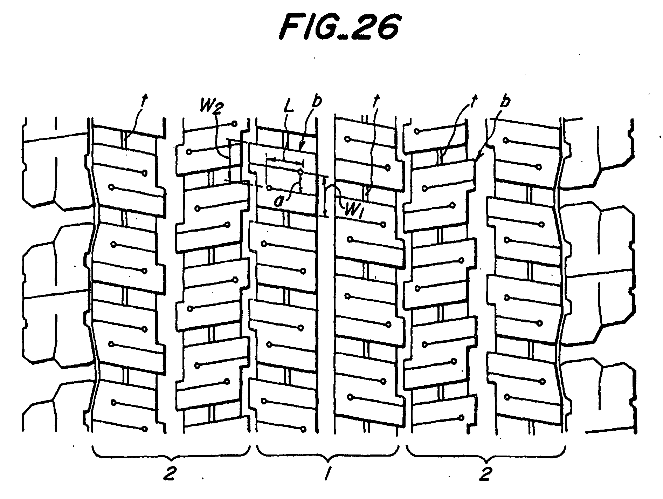

In Fig. 26 is shown a tread pattern applied to a pneumatic tire having lateral grooves with a step difference t (heavy duty pneumatic tire having a size of 11R22.5).

In this embodiment, each of blocks $b_1$, $b_2$ existing in the central zone 1 and both side zones 2 of the tread (size of block: 22.6 mm in a rotating direction, 25.0 mm in a widthwise direction) is provided with two straight sipes $S_1$, $S_2$ extending along an edge of the block in the widthwise direction (pin flask type, overlap length L = 15 mm, straight distance from an edge of the block not opened by the sipe to a sipe nearest thereto = 7.5 mm, $w_1$=$w_2$= 16 mm, straight distance a between mutual sipes = 6 mm, sipe interval ratio a/$w_1$, a/$w_2$ = 0.375 mm), and a cross sipe depth D is 0 mm.

In such a pneumatic tire, the rubber flowing is smooth from the lower portion of the blade of the mold in the vulcanization building, and the uneven wear can be improved without causing creasing resulting in flow cracking.

According to the invention, the rubber flowing is smoothly conducted in the mold during the vulcanization building, so that there can be prevented the occurrence of creasing, which has been a problem in the manufacture of a pneumatic tire provided with at least a pair of one-side opened sipes alternately opening at their ends to opposed circumferential grooves.

## Claims

1. A pneumatic tire having a tread pattern of blocks (b) defined by circumferential grooves (k) extending along a rotating direction of the tire and lateral grooves (i) extending along a widthwise direction of the tire and having a depth shallower than a depth of the circumferential groove, in which each of the blocks has two or more sipes ($S_1$,$S_2$) having a depth (d) different from the depth of the lateral groove and two sipes among said sipes are a pair of one-side opened sipes alternately opening at their ends to opposed circumferential grooves along substantially the widthwise direction of the tire and having a portion (L) apparently overlapped with each other in the block viewing from a side of the block, **characterized in that** the pair of the one-side opened sipes ($S_1$,$S_2$) satisfies the following relationship between cross sipe depth (D) and side interval ratio (a/w):

$$D \le (a/w \times 50) - 18$$

where

       D: a distance from the deepest position in the crossing of the pair of the sipes $(S_1, S_2)$ viewed at an apparent overlapped state in a side view of a single block (b) to an intersect position between a line segment (n) passing through the deepest position and perpendicular to the surface of the block and the groove bottom of the lateral grooves (i) apparently sandwiching the block in the side view of the block;

a: the shortest distance between the pair of the sipes at the bottom of the one-side opened sipe

w: the farthest distance in parallel to the shortest distance (a) and between an edge of the block not opened by the sipe and the one-side opened sipe, provided that when $w_1$ is not equal to $w_2$ then a smaller value in either of them is adopted;

and a slant portion $(S_k)$ changing the sipe depth along the lateral groove is formed between a cut edge $(S_a)$ of the sipe $(S_1, S_2)$ and the bottom portion thereof to connect them.

2. A pneumatic tire having a tread pattern of blocks (b) defined by circumferential grooves (k) extending along a rotating direction of the tire and lateral grooves (i) extending along a widthwise direction of the tire and having a depth shallower than a depth of the circumferential groove, in which each of the blocks has two or more sipes $(S_1, S_2)$ having a depth different from the depth of the lateral groove and two sipes among said sipes are a pair of one-side opened sipes alternately opening at their ends to opposed circumferential grooves along substantially the widthwise direction of the tire and having a portion (L) apparently overlapped with each other in the block viewing from a side of the block, **characterized in that** the pair of the one-side opened sipes $(S_1, S_2)$ satisfies the following relationship between cross sipe depth (D) and sipe interval ratio (a/w):

$$D \leq (a/w \times 50) - 18$$

where D: a distance from the deepest position in the crossing of the pair of the sipes $(S_1, S_2)$ viewed at an apparent overlapped state in a side view of a single block (b) to an intersect position between a line segment (n) passing through the deepest position and perpendicular to the surface of the block and the groove bottom of the lateral grooves (i) apparently sandwiching the block in the side view of the block;

a: the shortest distance between the pair of the sipes at the bottom of the one-side opened sipe;

w: the farthest distance in parallel to the shortest distance (a) and between an edge of the block not opened by the sipe and the one-side opened sipe, provided that when $w_1$ is not equal to $w_2$ then a smaller value in either of them is adopted;

and said pair of sipes $(S_1, S_2)$ has a depth deeper than the depth of the lateral groove.

3. A pneumatic tire as claimed in claim 1 or 2, **characterized in that** the overlap length (L) between the sipes $(S_1, S_2)$ in the block (b) is not less than 10 mm.

4. A pneumatic tire as claimed in claim 3, **characterized in that** when the cross sipe depth (D) is not more than 3 mm, the one-side opened sipes $(S_1, S_2)$ satisfy the following conditions when the shortest distance between the sipes at the bottom portion of the sipe is (a) and distances from an edge of the block not opened by the sipe to one of the one-side opened sipes farthest from the edge of the block is $w_1$ or $w_2$.

$$0.42 \leq a/w_1 < 1.0 \text{ and } 0.42 \leq a/w_2 < 1.0$$

5. A pneumatic tire as claimed in any of claims 1 to 4, **characterized in that** a straight distance $(L_1, L_2)$ from the edge (e) of the block (b) not opened by the sipe to a sipe $(S_2, S_1)$ nearest to the block edge is 20-40% of a length (m) of the block along the block edge.

6. A pneumatic tire as claimed in any of claims 1 to 5, **characterized in that** the sipe $(S_1, S_2)$ is a flask type sipe.

7. A pneumatic tire as claimed in any of claims 1 to 5, **characterized in that** the sipe $(S_1, S_2)$ is a one-side flask type sipe.

## Patentansprüche

1. Luftreifen mit einem Laufflächenmuster aus Blöcken (b), die durch Umfangsrillen (k), die sich entlang einer Drehungsrichtung des Reifens erstrecken, und seitliche Rillen (i) definiert werden, die sich entlang einer Breitenrichtung des Reifens erstrecken und eine Tiefe aufweisen, die flacher ist als eine Tiefe der Umfangsrille, wobei jeder der Blöcke zwei oder mehrere Lamellen $(S_1, S_2)$ mit einer Tiefe (d) aufweist, die von der Tiefe der seitlichen Rille abweichend ist, und wobei zwei Lamellen unter den Lamellen ein Paar von einseitig geöffneten Lamellen sind, die sich abwechselnd an ihren Enden zu den gegenüberliegenden Umfangsrillen entlang im wesentlichen der Breitenrichtung des Reifens öff-

11 **EP 0 911 187 B1** 12

nen und einen Abschnitt (L) aufweisen, der sich offensichtlich miteinander im Block überdeckt, von einer Seite des Blockes aus betrachtet, **dadurch gekennzeichnet, daß** das Paar von einseitig geöffneten Lamellen ($S_1$, $S_2$) die folgende Beziehung zwischen der Querlamellentiefe (D) und dem Lamellenabstandsverhältnis (a/w) erfüllt:

$$D \leq (a/w \text{ x } 50) - 18$$

worin sind:

D: ein Abstand von der tiefsten Position in der Überkreuzung des Paares der Lamellen ($S_1$, $S_2$), in einem offensichtlichen überdeckten Zustand in einer Seitenansicht eines einzelnen Blockes (b) betrachtet, bis zu einer Schnittposition zwischen einer Strecke (n), die durch die tiefste Position hindurchgeht und senkrecht zur Oberfläche des Blockes, und wobei der Rillenboden der seitlichen Rillen (i) offensichtlich den Block in der Seitenansicht des Blockes dazwischen anordnet;
a: der kürzeste Abstand zwischen dem Paar der Lamellen am Boden der einseitig geöffneten Lamelle;
w: der weiteste Abstand parallel zum kürzesten Abstand (a) und zwischen einem Rand des Blockes, der nicht durch die Lamelle geöffnet wird, und der einseitig geöffneten Lamelle, vorausgesetzt, daß, wenn $w_1$ nicht gleich $w_2$ ist, dann ein kleinerer Wert bei beiden von ihnen angenommen wird;

und ein schräger Abschnitt ($S_k$), der die Lamellentiefe entlang der seitlichen Rille verändert, wird zwischen einer Schnittkante ($S_a$) der Lamelle ($S_1$, $S_2$) und dem Bodenabschnitt davon gebildet, um sie zu verbinden.

2. Luftreifen mit einem Laufflächenmuster aus Blöcken (b), die durch Umfangsrillen (k), die sich entlang einer Drehungsrichtung des Reifens erstrecken, und seitliche Rillen (i) definiert werden, die sich entlang einer Breitenrichtung des Reifens erstrecken und eine Tiefe aufweisen, die flacher ist als eine Tiefe der Umfangsrille, wobei jeder der Blöcke zwei oder mehrere Lamellen ($S_1$, $S_2$) mit einer Tiefe aufweist, die von der Tiefe der seitlichen Rille abweichend ist, und wobei zwei Lamellen unter den Lamellen ein Paar von einseitig geöffneten Lamellen sind, die sich abwechselnd an ihren Enden zu den gegenüberliegenden Umfangsrillen entlang im wesentlichen der Breitenrichtung des Reifens öffnen und einen Abschnitt (L) aufweisen, der sich offensichtlich miteinander im Block überdeckt, von einer Seite des Blockes aus betrachtet, **dadurch ge-**

**kennzeichnet, daß** das Paar von einseitig geöffneten Lamellen ($S_1$, $S_2$) die folgende Beziehung zwischen der Querlamellentiefe (D) und dem Lamellenabstandsverhältnis (a/w) erfüllt:

$$D \leq (a/w \text{ x } 50) - 18$$

worin sind:

D: ein Abstand von der tiefsten Position in der Überkreuzung des Paares der Lamellen ($S_1$, $S_2$), in einem offensichtlichen überdeckten Zustand in einer Seitenansicht eines einzelnen Blockes (b) betrachtet, bis zu einer Schnittposition zwischen einer Strecke (n), die durch die tiefste Position hindurchgeht und senkrecht zur Oberfläche des Blockes, und wobei der Rillenboden der seitlichen Rillen (i) offensichtlich dazwischen den Block in der Seitenansicht des Blockes dazwischen anordnet;
a: der kürzeste Abstand zwischen dem Paar der Lamellen am Boden der einseitig geöffneten Lamelle;
w: der weiteste Abstand parallel zum kürzesten Abstand (a) und zwischen einem Rand des Blockes, der nicht durch die Lamelle geöffnet wird, und der einseitig geöffneten Lamelle, vorausgesetzt, daß, wenn $w_1$ nicht gleich $w_2$ ist, dann ein kleinerer Wert bei beiden von ihnen angenommen wird;

wobei das Paar Lamellen ($S_1$, $S_2$) eine Tiefe aufweist, die tiefer ist als die Tiefe der seitlichen Rille.

3. Luftreifen nach Anspruch 1 oder 2, **dadurch gekennzeichnet, daß** die Überdeckungslänge (L) zwischen den Lamellen ($S_1$, $S_2$) im Block (b) nicht kleiner ist als 10mm.

4. Luftreifen nach Anspruch 3, **dadurch gekennzeichnet, daß**, wenn die Querlamellentiefe (D) nicht größer ist als 3 mm, die einseitig geöffneten Lamellen ($S_1$, $S_2$) die folgenden Bedingungen erfüllen, wenn der kürzeste Abstand zwischen den Lamellen am Bodenabschnitt der Lamelle (a) beträgt und die Abstände von einem Rand des Blockes, der nicht durch die Lamelle geöffnet wird, zu einem der einseitig geöffneten Lamellen am weitesten vom Rand des Blockes $w_1$ oder $w_2$ beträgt:

$$0,42 \leq a/w_1 < 1,0 \qquad \text{und} \qquad 0,42 \leq a/w_2 < 1,0$$

5. Luftreifen nach einem der Ansprüche 1 bis 4, **dadurch gekennzeichnet, daß** ein geradliniger Abstand ($L_1$, $L_2$) vom Rand (e) des Blockes (b), der nicht durch die Lamelle geöffnet ist, zu einer Lamelle ($S_2$, $S_1$), die dem Blockrand am nächsten ist, 20 bis 40% einer Länge (m) des Blockes entlang des Blockrandes beträgt.

6. Luftreifen nach einem der Ansprüche 1 bis 5, **dadurch gekennzeichnet, daß** die Lamelle ($S_1$, $S_2$) eine flaschenartige Lamelle ist.

7. Luftreifen nach einem der Ansprüche 1 bis 5, **dadurch gekennzeichnet, daß** die Lamelle ($S_1$, $S_2$) eine einseitige flaschenartige Lamelle ist.

## Revendications

1. Bandage pneumatique possédant un motif de bande de roulement à blocs (b) définis par des rainures circonférentielles (k) s'étendant le long de la direction de rotation du pneu et des rainures latérales (i) s'étendant le long de la direction de la largeur du pneu et possédant une profondeur moins grande que la profondeur de la rainure circonférentielle, dans lequel chacun des blocs possède deux ou plusieurs lamelles ($S_1$, $S_2$) possédant une profondeur (d) différente de la profondeur de la rainure latérale et deux lamelles parmi lesdites lamelles forment une paire de lamelles ouvertes d'un côté s'ouvrant alternativement en leurs extrémités sur des rainures circonférentielles opposées le long essentiellement de la direction de la largeur du pneu et possédant une portion (L) de chevauchement apparent de l'une avec l'autre dans le bloc en regardant à partir d'un côté du bloc, **caractérisé en ce que** la paire des lamelles ouvertes d'un côté ($S_1$, $S_2$) satisfait la relation suivante entre la profondeur de lamelle transversale (D) et le rapport des intervalles de lamelle (a/w):

$$D \leq (a/w \times 50) - 18$$

où

D représente: la distance à partir de la position la plus profonde dans le croisement de la paire de lamelles ($S_1$, $S_2$) vue dans un état apparent de chevauchement en regardant de côté un bloc simple (b) jusqu'à la position d'intersection entre un segment rectiligne (n) passant à travers la position la plus profonde et perpendiculaire à la surface du bloc et le fond de rainure des rainures latérales (i) entourant apparemment le bloc en regardant de côté le bloc;
a représente: la distance la plus courte entre la paire de lamelles au fond de la lamelle ouverte d'un côté;
w représente: la distance la plus éloignée parallèle à la distance la plus courte (a) et comprise entre le bord du bloc sur lequel la lamelle ne s'ouvre pas et la lamelle ouverte d'un côté, à condition que si $w_1$ n'est pas égal à $w_2$ alors la plus petite valeur de chacune d'elles soit adoptée;

et une portion inclinée ($S_k$) avec changement de la profondeur de lamelle le long de la rainure latérale est formée entre le bord de coupe ($S_a$) de la lamelle ($S_1$, $S_2$) et sa portion inférieure pour les relier.

2. Bandage pneumatique possédant un motif de bande de roulement à blocs (b) définis par des rainures circonférentielles (k) s'étendant le long de la direction de rotation du pneu et des rainures latérales (i) s'étendant le long de la direction de la largeur du pneu et possédant une profondeur moins grande que la profondeur de la rainure circonférentielle, dans lequel chacun des blocs possède deux ou plusieurs lamelles ($S_1$, $S_2$) possédant une profondeur différente de la profondeur de la rainure latérale et deux lamelles parmi lesdites lamelles forment une paire de lamelles ouvertes d'un côté s'ouvrant alternativement en leurs extrémités sur des rainures circonférentielles opposées le long essentiellement de la direction de la largeur du pneu et possédant une portion (L) de chevauchement apparent de l'une avec l'autre dans le bloc en regardant à partir d'un côté du bloc, **caractérisé en ce que** la paire des lamelles ouvertes d'un côté ($S_1$, $S_2$) satisfait la relation suivante entre la profondeur de lamelle transversale (D) et le rapport des intervalles de lamelle (a/w):

$$D \leq (a/w \times 50) - 18$$

où

D représente: la distance à partir de la position la plus profonde dans le croisement de la paire de lamelles ($S_1$, $S_2$) vue dans un état apparent de chevauchement en regardant de côté un bloc simple (b) jusqu'à la position d'intersection entre un segment rectiligne (n) passant à travers la position la plus profonde et perpendiculaire à la surface du bloc et le fond de rainure des rainures latérales (i) entourant apparemment le bloc en regardant de côté le bloc;
a représente: la distance la plus courte entre la paire de lamelles au fond de la lamelle ouverte d'un côté;
w représente: la distance la plus éloignée parallèle à la distance la plus courte (a) et comprise entre le bord du bloc sur lequel la lamelle ne s'ouvre pas et la lamelle ouverte d'un côté, à condition que si $w_1$ n'est pas égal à $w_2$ alors la plus petite valeur de chacune d'elles soit adoptée;

et ladite paire de lamelles ($S_1$, $S_2$) possède une profondeur plus grande que la profondeur de la rainure latérale.

3. Bandage pneumatique comme revendiqué dans la revendication 1 ou 2, **caractérisé en ce que** la longueur de chevauchement (L) entre les lamelles ($S_1$, $S_2$) dans le bloc (b) n'est pas inférieure à 10 mm.

4. Bandage pneumatique comme revendiqué dans la revendication 3, **caractérisé en ce que** lorsque la profondeur de lamelle transversale (D) n'est pas supérieure à 3 mm, les lamelles ouvertes d'un côté ($S_1$, $S_2$) satisfont les conditions suivantes où (a) représente la distance la plus courte entre les lamelles dans la portion inférieure de la lamelle et $w_1$ ou $w_2$ représente les distances à partir d'un bord du bloc sur lequel la lamelle ne s'ouvre pas jusqu'à une des lamelles ouvertes d'un côté la plus éloignée du bord du bloc.

$$0,42 \leq a/w_1 < 1,0 \qquad et \qquad 0,42 \leq a/w_2 < 1,0$$

5. Bandage pneumatique comme revendiqué dans une quelconque des revendications 1 à 4, **caractérisé en ce que** la distance en ligne droite ($L_1$, $L_2$) à partir du bord (e) du bloc (b) sur lequel la lamelle ne s'ouvre pas jusqu'à la lamelle ($S_2$, $S_1$) la plus proche du bord du bloc est de 20%-40% de la longueur (m) du bloc le long du bord du bloc.

6. Bandage pneumatique comme revendiqué dans une quelconque des revendications 1 à 5, **caractérisé en ce que** la lamelle ($S_1$, $S_2$) est une lamelle du type flacon.

7. Bandage pneumatique comme revendiqué dans une quelconque des revendications 1 à 5, **caractérisé en ce que** la lamelle ($S_1$, $S_2$) est une lamelle du type flacon d'un côté.

## FIG_1

A - A section

## FIG_2

B - B section

C - C section

Composite

# FIG. 3

# FIG. 4

(a)

(b)

FIG.5

FIG.6

FIG.7

# FIG.8

FIG.9

# FIG. 10

Creasing depth (mm) vs. a/W₁ and a/W₂ scatter plot

| Parameter | Abscissa a/W₁ and a/W₂ | Ordinate Creasing depth (mm) |
|---|---|---|
| Number of data | 309 | |
| Minimum value | 0.253 | 0.000 |
| Maximum value | 0.500 | 10.000 |
| Average value | 0.406 | 1.230 |
| Standard deviation | 0.049 | 2.077 |
| Mutual coefficient | −0.7996 | |

## FIG. 11

(a)

(b)

EP 0 911 187 B1

FIG.12

A - A section

17

## FIG. 13

FIG_14

FIG_15

FIG_16

## FIG_17

## FIG_18

FIG.19

# FIG.20

Composite

FIG.21

FIG. 22

# FIG. 23

FIG.24

EP 0 911 187 B1

## FIG. 25

FIG.26

## FIG. 27